# EUROPÄISCHE PATENTSCHRIFT

(11) **EP 1 978 289 B1**
(45) Veröffentlichungstag und Bekanntmachung des Hinweises auf die Patenterteilung: **19.05.2010**
(21) Anmeldenummer: 08153361.4
(22) Anmeldetag: 27.03.2008
(51) Int. Cl.: F16L 5/00, H02G 3/06, H02G 3/08, H02G 3/22

(54) **Vorrichtung zum Durchführen einer Leitung**
Device for leading through a conduit
Dispositif de traversée de conduite

(30) Priorität: 02.04.2007 DE 102007016183
(43) Veröffentlichungstag der Anmeldung: 08.10.2008
(73) Patentinhaber: Murrplastik Systemtechnik GmbH, 71570 Oppenweiler (DE)
(72) Erfinder:
(74) Vertreter: Reule, Hanspeter

(56) Entgegenhaltungen:
- DE-A1- 3 731 149
- DE-U- 1 830 666
- DE-U1-202004 008 388
- JP-A- 2000 230 671
- US-A- 3 163 882
- US-A- 4 616 105
- US-A- 5 772 159

## Beschreibung

Die Erfindung betrifft eine Vorrichtung zum Durchführen einer Leitung durch eine Wandöffnung nach dem Oberbegriff von Anspruch 1, siehe beispielsweise die US 3 163 882 A.

Mitteils solcher Vorrichtungen werden Leitungen, wie Kabel, Schläuche oder Kabel aufnehmende Schutzschläuche, insbesondere Wellschläuche, durch Wandöffnungen, wie beispielsweise an einem Schaltschrank, durchgeführt. Insbesondere sind Schlauchverschraubungen bekannt, die aus zwei Teilen bestehen: das erste Teil wird teilweise durch die Wandöffnung durchgesteckt. Durch dieses Teil wird die Leitung durchgeführt. Auf der anderen Seite der Wand wird das zweite Teil über die Leitung geführt und auf das erste aufgeschraubt, wobei sich beim Aufschrauben die lichte Weite des ersten Teils verringert und die durchgeführte Leitung festklemmt. Dadurch wird zum einen eine Zugentlastung erreicht, zum anderen eine Abdichtung der Wandöffnung. Solche Schlauchverschraubungen haben jedoch einen Nachteil. Weist die durchzuführende Leitung einen Stecker an ihrem Ende auf, so passt dieser oftmals nicht durch die Schlauchverschraubung. Insbesondere dann, wenn die Schlauchverschraubung einen mehrere elektrische Kabel enthaltenden Schutzschlauch aufnimmt, passen die am Ende des Schutzschlauchs aus ihm herausragenden Stecker nicht durch die Schlauchverschraubung. Bei der Montage der Leitung und der Schlauchverschraubung müssen daher zunächst die Stecker von den Kabeln entfernt werden und nach Durchführung der Kabel wieder angelötet werden. Dies ist arbeits- und zeitaufwendig.

Es ist daher Aufgabe der Erfindung, eine Vorrichtung der eingangs genannten Art derart weiterzubilden, dass die Montage an der Wandöffnung vereinfacht wird.

Die Aufgabe wird erfindungsgemäß durch eine Vorrichtung mit den Merkmalen des Anspruchs 1 gelöst. Vorteilhafte Weiterbildungen sind Gegenstand der abhängigen Ansprüche.

Der Erfindung liegt der Gedanke zugrunde, dass die Durchführungsvorrichtung zwei Halteelemente aufweist, von denen keines den vollen Umfang der aufzunehmenden Leitung umschließt. Es ist daher möglich, die Leitung in radialer Richtung der Halteelemente, also seitlich, einzuführen, so dass am Ende der Leitung befindliche Stecker nicht durch die Halteelemente durchgeführt werden müssen. Dies ist insbesondere dann vorteilhaft, wenn die Durchführungsvorrichtung einen Schutzschlauch aufnimmt, der mehrere elektrische Kabel enthält. Deren Stecker können einzeln durch die Wandöffnung durchgeführt werden. Anschließend werden die Halteelemente auf den Schutzschlauch aufgesetzt. Das erste Halteelement befindet sich auf der einen Seite der Wand, das zweite Halteelement auf der anderen Seite der Wand. Indem beide Halteelemente miteinander verbunden sind, ist der Rand der Wandöffnung fest zwischen den Anlageflächen aufgenommen.

Erfindungsgemäß haben die Halteelemente jeweils die Form eines offenen Rings und umfassen jeweils mehr als die Hälfte des Umfangs der Leitung, aber weniger als einen Anteil von 260/360 des Umfangs der Leitung. Sie überlappen sich dann in Umfangsrichtung ein Stück weit, so dass sie stabil miteinander verbunden sind. Dabei wird bevorzugt, dass das zweite Halteelement mit seinen freien Enden auf eine Außenseite des Durchgriffselements aufgeschoben ist und abschnittsweise flächig an diesem anliegt. Zweckmäßig weist das zweite Halteelement an seiner Innenseite Rastvorsprünge auf, die in Vertiefungen in der Außenseite des Durchgriffselements eingreifen. Diese Maßnahmen erhöhen die Stabilität der Verbindung der beiden Halteelemente.

Die Halteelemente sind bevorzugt elastisch verformbar. Dadurch können sie ein Stück weit aufgebogen werden, zum einen um sie besser auf die durchzuführende Leitung aufschieben zu können, zum anderen um das zweite Halteelement auf das erste aufstecken zu können. Um das Aufbiegen zu erleichtern, weist das erste und/oder das zweite Halteelement an seinen freien Enden zweckmäßig radial abstehende Griffe auf.

Mittels der Durchführungsvorrichtung kann ein Kabel oder ein Schlauch durch die Wandöffnung durchgeführt werden. Dabei ist es möglich, dass die Halteelemente flächig an der Außenseite des Kabels oder des Schlauchs anliegen und ihn kraftschlüssig festhalten. Handelt es sich bei der durchzuführenden Leitung um einen Wellschlauch, so wird bevorzugt, dass die Halteelemente jeweils an ihrer Innenseite eine Halterippe zum Eingreifen in ein Wellental des Wellschlauchs aufweisen. Dadurch ist der Wellschlauch in seiner Längsrichtung an den Halteelementen fixiert, die wiederum an der Wand befestigt sind. Durch diese Maßnahme wird sowohl eine gute Zugentlastung als auch eine Abdichtung der Wandöffnung erreicht. Zur Verbesserung der Abdichtung ergänzen sich die Halterippen zweckmäßig zu einem um den Wellschlauch umlaufenden Haltering.

Im Folgenden wird die Erfindung anhand eines in der Zeichnung in schematischer Weise dargestellten Ausführungsbeispiels näher erläutert. Es zeigen
- Fig. 1: eine schematische Darstellung einer Durchführungsvorrichtung mit einem Wellschlauchabschnitt und einer Wandöffnung in Explosionsdarstellung;
- Fig. 2: die Vorrichtung gemäß Fig. 1 vor dem letzten Montageschritt;
- Fig. 3: das erste Halteelement gemäß Fig. 1 und 2 und
- Fig. 4: das zweite Halteelement gemäß Fig. 1 und 2.

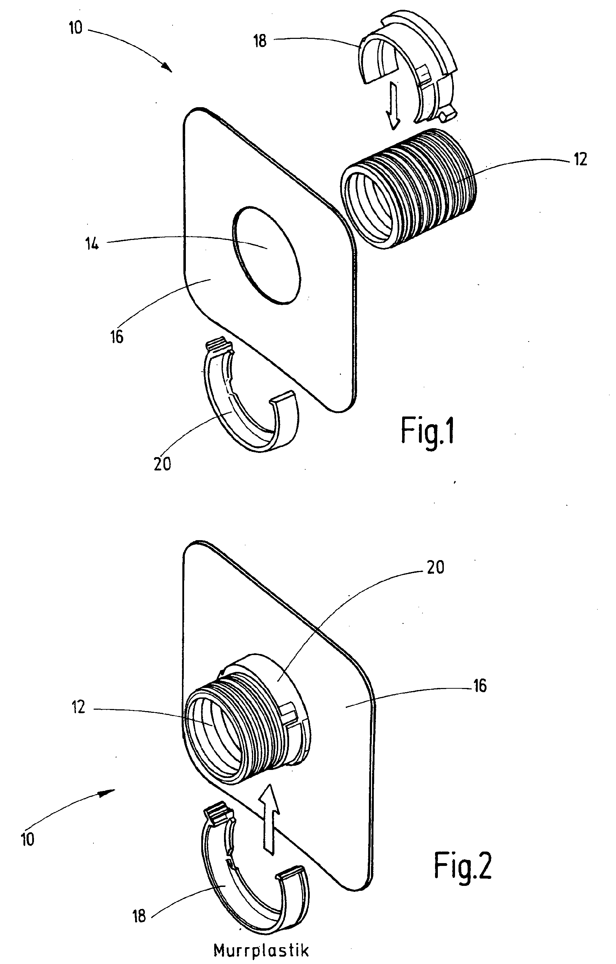

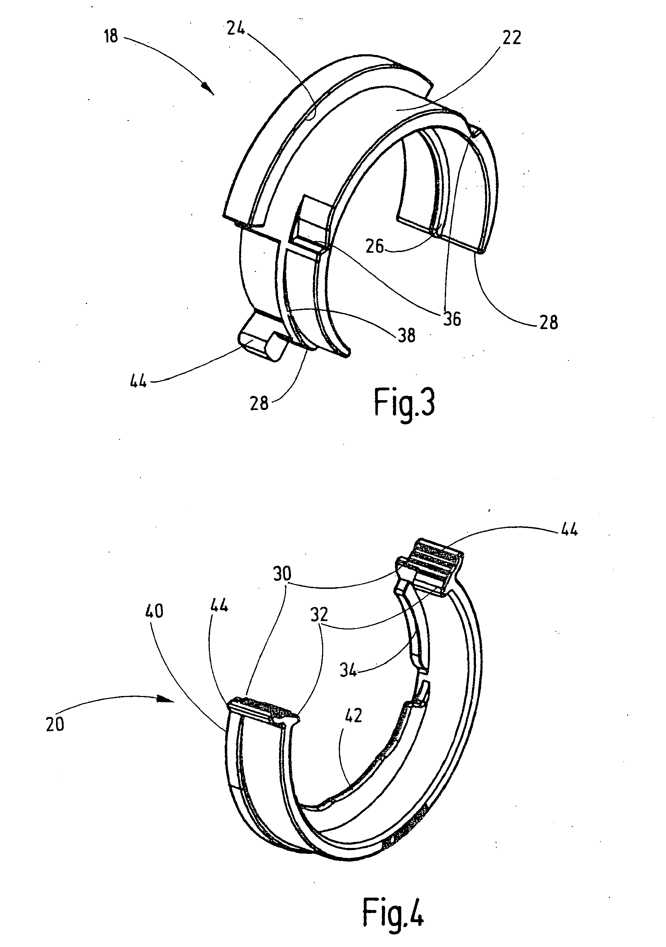

In Fig. 1 und 2 ist schematisch gezeigt, wie mittels einer Durchführungsvorrichtung 10 ein Wellschlauch 12 durch eine Öffnung 14 einer Wand 16, beispielsweise einer Schaltschrankwand durchgeführt und an der Wand 16 befestigt wird. Die Durchführungsvorrichtung 10 weist ein erstes Halteelement 18 (Fig. 3) und ein zweites Halteelement 20 (Fig. 4) auf. Das erste Halteelement 18 weist ein Durchgriffselement 22 auf, das, wie in Fig. 2 gezeigt, durch die Wandöffnung 14 durchgeführt wird. Desweiteren weist es eine erste Anlagefläche 24 auf, die an der dem Betrachter abgewandten Wandinnenfläche zur Anlage kommt. An einer Innenseite des Durchgriffselements 22 ist eine erste Halterippe 26 angeformt, die in ein Wellental des Wellschlauchs 12 eingreift. Im montierten Zustand liegt das Durchgriffselement 22 mit seiner Innenseite am Wellschlauch 12 an. Das erste Halteelement 18 weist annähernd eine Ringform auf, ist aber nach einer Seite hin offen, so dass es den Wellschlauch 12 nicht vollständig umfasst. Im gezeigten Ausführungsbeispiel beträgt der Öffnungswinkel etwas mehr als 100°. Da das erste Halteelement 18 als Spritzgussteil aus Kunststoff gefertigt ist und elastisch verformbar ist, kann der Öffnungswinkel zum Aufsetzen auf den Wellschlauch 12 durch Auseinanderbiegen der freien Enden 28 des ersten Halteelements 18 vergrößert werden.

Das erste Halteelement 18 wird auf den Wellschlauch 12 aufgesetzt und anschließend wird sein Durchgriffselement 22 durch die Wandöffnung 14 durchgeführt, bis die erste Anlagefläche 24 an der Innenfläche der Wand 16 anliegt (Fig. 2). Zum Fixieren des Wellschlauchs 12 an der Wand 16 wird das zweite Halteelement 20 (Fig. 4) am ersten Halteelement 18 befestigt.

Das als elastisches Spritzgussteil aus Kunststoff gefertigte zweite Halteelement 20 weist ebenfalls annähernd eine Ringform auf und ist zu einer Seite hin offen, wobei der Öffnungswinkel wiederum etwas mehr als 100° beträgt. Auch das zweite Halteelement 20 umfasst somit nicht den gesamten Umfang des Wellschlauchs 12. Seine freien Enden 30 werden über die Außenseite des Durchgriffselements 22 geschoben. Hierzu werden sie gegen eine Rückstellkraft auseinandergebogen. Zum Befestigen am Durchgriffselement 22 weist das zweite Halteelement 20 aus seiner Innenseite vorspringende Rasthaken 32 und in Umfangsrichtung verlaufende Verschlussrippen 34 auf, die in entsprechende Rastvertiefungen 36 und Haltenuten 38 in der Außenseite des Durchgriffselements 22 eingreifen, so dass die Halteelemente 18, 20 aneinander fixiert sind. Dabei liegt die Innenseite des zweiten Halteelements 20 an der Außenseite des Durchgriffselements 22 abschnittsweise flächig an, und die beiden miteinander verrasteten Halteelemente 18, 20 umschließen den Wellschlauch 12 vollumfänglich. Das zweite Halteelement 20 weist eine zweite Anlagefläche 40 auf, mit der sie an der dem Betrachter zugewandten Außenfläche der Wand 16 anliegt, so dass die Wand 16 am Rand ihrer Öffnung 14 zwischen den Halteelementen 18, 20 aufgenommen ist. Desweiteren weist auch das zweite Halteelement 20 eine Halterippe 42 auf, die in ein Wellental des Wellschlauchs 12 eingreift. Die beiden Halterippen 26, 42 ergänzen sich zu einem um den Wellschlauch 12 in seinem Wellental umlaufenden Haltering. Um ein Aufbiegen der Halteelemente 18, 20 bei der Montage und Demontage zu erleichtern, weisen diese an ihren freien Enden 28, 30 jeweils einen radial abstehenden Handgriff 44 auf.

### Zusammenfassend ist folgendes festzuhalten:

Die Erfindung betrifft eine Vorrichtung 10 zum Durchführen einer Leitung 12 durch eine Wandöffnung 14 mit zwei Halteelementen 18, 20 zum Befestigen der Leitung 12 an der Wand 16. Die Halteelemente 18, 20 umfassen jeweils einen Teil des Umfangs der Leitung 12. Gemeinsam umfassen die Halteelemente 18, 20 den gesamten Umfang der Leitung 12. Dabei weist ein erstes der Halteelemente 18 eine erste Anlagefläche 24 zur Anlage an der einen Seite der Wand 16 und ein Durchgriffselement 22 zum Durchführen durch die Wandöffnung 14 auf, während das zweite der Halteelemente 20 eine zweite Anlagefläche 40 zur Anlage an einer anderen Seite der Wand 16 und Mittel 32, 34 zum lösbaren Befestigen am Durchgriffselement 22 aufweist.

## Patentansprüche

1. Vorrichtung zum Durchführen einer Leitung (12) durch eine Wandöffnung (14) mit zwei Halteelementen (18, 20) zum Befestigen der Leitung (12) an der Wand (16), welche jeweils einen Teil des Umfangs und gemeinsam den gesamten Umfang der Leitung (12) umfassen, wobei ein erstes der Halteelemente (18) eine erste Anlagefläche (24) zur Anlage an der einen Seite der Wand (16) und ein Durchgriffselement (22) zum Durchführen durch die Wandöffnung (14) aufweist, und wobei das zweite der Halteelemente (20) eine zweite Anlagefläche (40) zur Anlage an der anderen Seite der Wand (16) und Mittel (32, 34) zum lösbaren Befestigen am Durchgriffselement (22) aufweist, **dadurch gekennzeichnet, dass** die Halteelemente (18, 20) jeweils die Form eines offenen Rings haben und jeweils mehr als die Hälfte des Umfangs der Leitung (12), aber weniger als einen Anteil von 260/360 des Umfangs der Leitung (12) umfassen.

2. Vorrichtung nach Anspruch 1, **dadurch gekennzeichnet, dass** das zweite Halteelement (20) mit seinen freien Enden (30) auf eine Außenseite des Durchgriffselements (22) aufgeschoben ist und abschnittsweise flächig an diesem anliegt.

3. Vorrichtung nach Anspruch 2, **dadurch gekennzeichnet, dass** das zweite Halteelement (20) an seiner Innenseite Rastvorsprünge (32, 34) aufweist, die in Vertiefungen (36, 38) in der Außenseite des Durchgriffselements (22) eingreifen.

4. Vorrichtung nach einem der vorangehenden Ansprüche, **dadurch gekennzeichnet, dass** die Halteelemente (18, 20) elastisch verformbar sind.

5. Vorrichtung nach Anspruch 4, **dadurch gekennzeichnet, dass** das erste und/oder das zweite Halteelement (18, 20) an seinen freien Enden (28, 30) radial abstehende Griffe (44) zum Aufbiegen aufweist.

6. Vorrichtung nach einem der vorangehenden Ansprüche, **dadurch gekennzeichnet, dass** die Halteelemente (18, 20) jeweils an ihrer Innenseite eine Halterippe (26, 42) zum Eingreifen in ein Wellental eines Wellschlauchs (12) aufweisen.

7. Vorrichtung nach Anspruch 6, **dadurch gekennzeichnet, dass** die Halterippen (26, 42) sich zu einem um den Wellschlauch (12) umlaufenden Haltering ergänzen.

## Claims

1. Device for passing a cable (12) through a wall opening (14) with two retaining elements (18, 20) for securing the cable (12) to the wall (16), which each surround part of the circumference and jointly the entire circumference of the cable (12), wherein a first of the retaining elements (18) has a first contact surface (24) for application to the one side of the wall (16) and a passage unit (22) for passing through the wall opening (14), and wherein the second of the retaining elements (20) has a second contact surface (40) for application to the other side of the wall (16) and means (32, 34) for detachable securing to the passage unit (22), **characterised in that** the retaining elements (18, 20) are in each case in the form of an open ring and in each case enclose more than half the circumference of the cable (12), but less than a proportion of 260/360 of the circumference of the cable (12).

2. Device according to claim 1, **characterised in that** the second retaining element (20) with its free ends (30) is slid onto an outside of the passage unit (22) and has a flat contact with this in sections.

3. Device according to claim 2, **characterised in that** the second retaining element (20) on its inside has catch projections (32, 34), which engage with indentations in the outside of the passage unit (22).

4. Device according to one of the above claims, **characterised in that** the retaining elements (18, 20) are elastically deformable.

5. Device according to claim 4, **characterised in that** the first and/or the second retaining element (18, 20) at its free ends (28, 30) has radially protruding grips (44) for bending up.

6. Device according to one of the above claims, **characterised in that** the retaining elements (18, 20) in each case on their inside have a retaining rib (26, 42) for engaging in a trough of a corrugated tube (12).

7. Device according to claim 6, **characterised in that** the retaining ribs (26, 42) are complementary to a retaining ring surrounding the corrugated tube.

## Revendications

1. Dispositif de passage traversant d'une conduite (12) franchissant une ouverture (14) de paroi, comprenant deux éléments de retenue (18, 20) affectés à la fixation de ladite conduite (12) à ladite paroi (16), qui embrassent respectivement une partie du pourtour et, associativement, la totalité du pourtour de ladite conduite (12), un premier élément (18), parmi lesdits éléments de retenue, comportant une première surface de contact (24) conçue pour venir en applique contre l'une des faces de la paroi (16), et un élément de traversée (22) destiné à franchir intégralement l'ouverture (14) de ladite paroi ; et le second élément (20), parmi lesdits éléments de retenue, offrant une seconde surface de contact (40) conçue pour venir en applique contre l'autre face de ladite paroi (16), et des moyens (32, 34) de fixation amovible audit élément de traversée (22), **caractérisé par le fait que** lesdits éléments de retenue (18, 20) revêtent, respectivement, la forme d'une bague ouverte et embrassent, à chaque fois, plus de la moitié du pourtour de la conduite (12), mais cependant moins qu'une partie représentant 260/360èmes dudit pourtour de ladite conduite (12).

2. Dispositif selon la revendication 1, **caractérisé par le fait que** le second élément de retenue (20) est enfilé, par ses extrémités libres (30), sur une face extérieure de l'élément de traversée (22) et porte à plat, par zones, contre ledit élément.

3. Dispositif selon la revendication 2, **caractérisé par le fait que** le second élément de retenue (20) présente, à sa face intérieure, des protubérances encliquetables (32, 34) qui pénètrent dans des creusures (36, 38) pratiquées dans la face extérieure de l'élément de traversée (22).

4. Dispositif selon l'une des revendications précédentes, **caractérisé par le fait que** les éléments de retenue (18, 20) sont élastiquement déformables.

5. Dispositif selon la revendication 4, **caractérisé par le fait que** le premier, et/ou le second élément de retenue (18, 20) présente(nt), à ses (leurs) extrémités libres (28, 30), des organes de préhension (44) saillant radialement en vue de l'ouverture par flexion.

6. Dispositif selon l'une des revendications précédentes, **caractérisé par le fait que** les éléments de retenue (18, 20) présentent respectivement, sur leur face intérieure, une nervure d'arrêt (26, 42) conçue pour pénétrer dans un creux d'ondulation d'un flexible annelé (12).

7. Dispositif selon la revendication 6, **caractérisé par le fait que** les nervures d'arrêt (26, 42) se complètent pour former une bague d'arrêt ceinturant la périphérie du flexible annelé (12).
